# EUROPÄISCHE PATENTANMELDUNG

(11) **EP 4 568 033 A1**
(43) Veröffentlichungstag der Anmeldung: **11.06.2025**
(21) Anmeldenummer: 24306968.9
(22) Anmeldetag: 25.11.2024
(51) Int. Cl.: H02G 3/06, H02G 3/08, H02G 3/22, H02G 15/04

(54) **GEHÄUSEDURCHFÜHRUNG MIT SCHIRMKONTAKTIERUNG**

(30) Priorität: 05.12.2023 DE 102023134005
(71) Anmelder: Nexans, 92400 Courbevoie (FR)
(72) Erfinder: STARK, Klaus, 92400 COURBEVOIE (FR)
(74) Vertreter: Ipsilon

(57) **Zusammenfassung**

Gehäusedurchführung, die zur Kontaktierung eines Schirms (103) einer geschirmten Leitung (101) geeignet ist und ein Verfahren zur Kontaktierung des Schirms vorgeschlagen. Die Gehäusedurchführung weist eine Einschraubhülse (201) mit einer Durchgangsöffnung (203) auf. Die Durchgangsöffnung (203) in der Einschraubhülse (201) umfasst einen Hohlraum (205), in welchen ein Klemmkörper (112) mit einer zentralen Durchgangsbohrung (113) aufnehmbar ist. In die Durchgangsbohrung (113) des Klemmkörpers ist eine geschirmte Leitung aufnehmbar. Die Gehäusedurchführung umfasst einen Klemmstempel (111), der mit der Einschraubhülse (201) zusammenwirkt, um eine axiale zur Einschraubhülse (201) hin gerichtete Druckkraft auf den Klemmkörper (112) auszuüben.

## Beschreibung

### Gebiet

Die Erfindung betrifft eine Gehäusedurchführung, die zur Kontaktierung eines Schirms einer Leitung geeignet ist, sowie ein Verfahren, um einen Schirm einer geschirmten Leitunge in einer Gehäusedurchführung zu kontaktieren.

### Hintergrund

Abgeschirmte elektrische Leitungen werden beispielsweise im Automobilbereich dazu verwendet, um elektrische Aggregate und Komponenten miteinander zu verbinden. Um Material und Gewicht zu sparen, ist dabei eine generelle Tendenz zu immer höheren Betriebsspannungen zu beobachten, die geringere Leitungsquerschnitte gestatten. Das gilt insbesondere für Fahrzeuge mit einem rein elektrischen Antrieb oder mit einem Hybridantrieb. In solchen Fahrzeugen werden Geräte und Verbraucher in zunehmendem Maße daher aus Stromquellen mit erhöhter Spannung versorgt. Die dabei eingesetzten Stromquellen können für Spannungen von bis zu 1000 V ausgelegt sein. Verbraucher sind bei Elektrofahrzeugen beispielsweise ein Antriebsmotor sowie Heizgeräte. Wegen der hohen Betriebsspannungen werden für die Verbindung von Verbrauchern mit einer Batterie häufig Leitungen eingesetzt, die einen elektrisch wirksamen Schirm aufweisen. Im Bereich eines Leitungsverteilers, einem Batteriegehäuse oder ganz allgemein einem geschirmten Gehäuse (nicht notwendigerweise in Kraftfahrzeugen) ist es daher notwendig, die Schirme der Leitungen zu kontaktieren, um eine durchgängige Abschirmung der von den hohen Betriebsspannungen erzeugten elektrischen Felder zu erzielen. Zu diesem Zweck sind Gehäusedurchführungen vorgesehen, die einerseits mit dem jeweiligen Gehäuse und andererseits mit dem Schirm der Leitung in elektrischem Kontakt sind.

Herkömmlicherweise werden die Schirme der Leitungen mittels unterschiedlicher Arten von Crimp-Verbindungen kontaktiert, die in der Regel Zug- und/oder Torsionskräfte auf den Schirm ausüben. Bei einem aus einem Drahtgeflecht gebildeten Schirm besteht daher die Gefahr, dass einzelne Drähte des Schirms abreißen und im ungünstigsten Fall einen Kurzschluss auslösen. Weiterhin ist mit herkömmlichen Schirmkontaktierung nicht sichergestellt, dass der Schirm auf seinen gesamten Umfang kontaktiert ist.

Hiervon ausgehend hat die vorliegende Erfindung die Aufgabe, eine Gehäusedurchführung mit Schirmkontaktierung zu schaffen, um eines oder mehrere der eingangs genannten Probleme zu überwinden oder zumindest zu verbessern.

### Beschreibung der Erfindung

Zur Lösung dieser Aufgabe schlägt die Erfindung nach einem ersten Aspekt eine Gehäusedurchführung vor, die zur Kontaktierung eines Schirms einer geschirmten Leitung geeignet ist, mit einer Einschraubhülse, die eine Durchgangsöffnung aufweist. Die Durchgangsöffnung in der Einschraubhülse umfasst einen Hohlraum, in welchen ein Klemmkörper mit einer zentralen Durchgangsbohrung aufnehmbar ist. In die Durchgangsbohrung des Klemmkörpers ist eine geschirmte Leitung aufnehmbar. Die Gehäusedurchführung umfasst einen Klemmstempel, der mit der Einschraubhülse zusammenwirkt, um eine axiale zur Einschraubhülse hin gerichtete Druckkraft auf den Klemmkörper auszuüben.

Die axiale Kraftausübung gewährleistet, dass auf den Schirm des Hochspannungskabels keine oder nur unwesentliche Torsionskräfte ausgeübt werden. Auf diese Weise wird vermieden, dass ein Draht eines Drahtgeflechts, das den Schirm bildet, abgerissen wird und einen Kurzschluss verursachen könnte. Sollte es dennoch in einem Ausnahmefall dazu kommen, dass ein Drahtstück abgerissen wird, dann ist dieses Drahtstück im Inneren der Einschraubhülse gefangen und kann keinen Kurzschluss verursachen.

Mit Vorteil ist die Einschraubhülse mit einem Außengewinde und der Klemmstempel mit einem Innengewinde versehen, die miteinander in Eingriff bringbar sind.

Mittels der auf der Einschraubhülse und dem Klemmstempel angeordneten Gewinden wird auf einfache Weise die erforderliche axiale Kraft zur Schirmkontaktierung erzeugt.

Es hat sich als zweckmäßig erwiesen, wenn der Klemmstempel einen zylindrischen Rohransatz aufweist, der mit dem Klemmkörper in Berührung ist. Der Rohransatz sorgt dafür, dass die axiale Kraft gleichmäßig auf den Klemmkörper übertragen wird.

Bei einem vorteilhaften Ausführungsbeispiel umfasst der Klemmstempel einen Ringraum, in welchen die Einschraubhülse teilweise aufnehmbar ist. Der Ringraum stellt sicher, dass der Klemmstempel nicht in unmittelbaren Kontakt mit der Einschraubhülse kommt, sodass die Klemmkraft ausschließlich auf den Klemmkörper übertragen wird.

Vorteilhafterweise ist die Gehäusedurchführung mit einer Ummantelung versehen, welche die Leitung gegenüber einem Außenraum abdichtet. Die Ummantelung sorgt dafür, dass Feuchtigkeit und andere Umwelteinflüsse aus dem Außenraum nicht in ein Gehäuse eindringen können, in welches die Gehäusedurchführung montiert ist. Gleichermaßen ist die Schirmkontaktierung vor Umwelteinflüssen geschützt.

Mit Vorteil kann die Ummantelung mit einer Dichtung versehen sein, um die Einschraubhülse gegenüber einer Gehäusewand abzudichten, in welche die Einschraubhülse eingeschraubt ist. Die Dichtung verbessert die Dichtwirkung der Ummantelung.

Besonders vorteilhaft ist es, wenn die Leitung gegenüber der Ummantelung zusätzlich mit einer Leitungsdichtung abgedichtet ist. Die Leitungsdichtung sorgt an der von der Gehäusewand abliegenden Seite der Ummantelung dafür, dass keine Umwelteinflüsse aus der Außenraum eindringen können.

Es hat sich als zweckmäßig erwiesen, wenn eine Haltekappe die Leitungsdichtung in einer Aufnahme der Ummantelung haltert. Die Haltekappe ist eine einfache Maßnahme, um die Leitungsdichtung zu fixieren.

Zweckmäßigerweise kann die Haltekappe mit Rasthaken, mit einer Schnappverbindung oder reibschlüssig mit der Ummantelung verbunden sein.

Bei einem besonders vorteilhaften Ausführungsbeispiel sind der Hohlraum der Einschraubhülse konisch und der Klemmkörper kegelförmig mit einer zentralen Durchgangsbohrung ausgebildet. Die Neigung einer Mantelfläche des kegelförmigen Klemmkörpers im Wesentlichen dem Öffnungswinkel des konisch ausgebildeten Hohlraums der Durchgangsöffnung entspricht. Eine konische bzw. kegelförmige Gestaltung von Hohlraum bzw. Klemmkörper vergrößern die Fläche, auf der der Schirm zwischen der Einschraubhülse und dem Klemmkörper gepresst wird und verbessern so den elektrischen Kontakt.

Nach einem zweiten Aspekt betrifft die Erfindung ein Verfahren, um einen Schirm einer geschirmten Leitung in einer Gehäusedurchführung zu kontaktieren, wobei das Verfahren umfasst:
- Absetzen eines äußeren Mantels, eines Schirms und eines inneren Mantels der Leitung;
- Aufschieben eines Klemmstempel und eines Klemmkörpers auf die geschirmte Leitung;
- Aufbördeln des Schirms und Auflegen des Schirmsauf eine Außenseite eines Klemmkörpers;
- Einschrauben einer Einschraubhülse in eine Gehäusewand; und
- Einpressen des Klemmkörpers in axialer Richtung in die Einschraubhülse.

Das vorgeschlagene Verfahren zur Kontaktierung des Schirms eines geschirmten Hochspannungskabels vermeidet die Ausübung von Torsionskräften auf das Schirmgeflecht. Auf diese Weise wird vermieden, dass ein Draht oder mehrere Drähte des Schirmgeschlechtes bei der Kontaktierung abgerissen werden und im ungünstigsten Fall einen Kurzschluss verursachen können. Die Klemmkräfte zur Kontaktierung des Schirmgeschlechtes werden zumindest ganz überwiegend nur axial ausgeübt.

Bei einer vorteilhaften Weiterbildung des Verfahrens wird als erstes eine Haltekappe, eine Leitungsdichtung und eine Ummantelung auf das Hochspannungskabel aufgeschoben. Diese Komponenten tragen bei einer fertig montierten Gehäusedurchführung zu einer verbesserten Abdichtung bei.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein Hochspannungskabel mit aufgefädelten Komponenten einer erfindungsgemäßen Gehäusedurchführung;
- Fig. 2: eine Explosionsdarstellung der erfindungsgemäßen Gehäusedurchführung; und
- Fig. 3: fertig montierte Gehäusedurchführung gemäß der Erfindung.

Gleiche oder ähnliche Elemente sind in den Figuren mit gleichen oder ähnlichen Bezugszeichen versehen.

### Ausführungsbeispiel

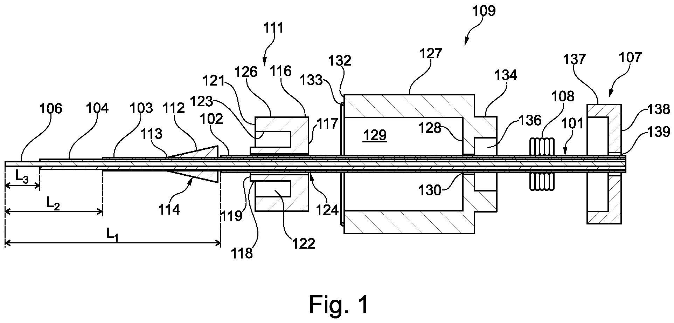

Figur 1 zeigt ein zur Kontaktierung vorbereitetes Hochspannungskabels 101, bei dem über eine Länge L1 der äußere Mantel 102 abgesetzt ist. Ein darunter liegender elektrische Schirm 103 ist über eine Länge L2 abgesetzt. Schließlich ist ein innerer Mantel 104 über eine Länge L3 abgesetzt, so dass ein elektrischer Leiter 106 mit einer Länge L3 frei liegt. Auf das Hochspannungskabel 101 sind in der Reihenfolge in Figur 1 von rechts nach links folgende Komponenten aufgefädelt: eine Haltekappe 107 für eine Leitungsdichtung 108 sowie die Leitungsdichtung 108 selbst, eine Ummantelung 109, ein Klemmstempel 111 und ein Klemmkörper, der im Folgenden als Klemmkeil 112 bezeichnet wird.

Der Klemmkeil 112 ist als rotationssymmetrischer Kegel mit einer Durchgangsbohrung 113 ausgebildet. Der Durchmesser der Durchgangsbohrung 113 ist kleiner als der Außendurchmesser des äußeren Mantels 102, aber groß genug, damit der freigelegte Schirm 103 des Hochspannungskabels 101 mit Spiel passieren kann, sodass eine Verschiebung des Klemmkeils 112 auf dem freigelegten Schirm 103 ohne nennenswerte Reibung möglich ist. Der Winkel einer Mantelfläche 114 des Klemmkeils 112 gegenüber der zentralen Durchgangsbohrung 113 beträgt zum Beispiel 10° bis 20°. Bei anderen Ausführungsbeispielen kann dieser Winkel auch anders gewählt sein. Im Extremfall ist auch ein Winkel von 90° möglich. Dann wäre der Klemmkörper ein Zylinder. Allerdings gilt, dass mit abnehmenden Winkeln die Fläche zunimmt, auf welcher der Schirm zwischen Einschraubhülse und Klemmkeil gepresst wird. Eine größere Fläche ist grundsätzlich vorteilhaft. Der Klemmkörper bzw. Klemmkeil 112 ist beispielsweise aus weichem Messing hergestellt.

Der Klemmstempel 111 ist als rotationssymmetrischer Körper mit einer Außenwand 116 und einem Boden 117 ausgebildet. Von dem Boden 117 erstreckt sich mittig ein Rohrstutzen 118 in Richtung auf den Klemmkeil 112. Eine Stirnfläche 119 des Rohrstutzens 118 springt gegenüber einer Stirnfläche 121 der Außenwand 116 vor. Die Außenwand 116 und der Rohrstutzen 118 sind voneinander beanstandet und begrenzen einen Ringraum 122. Die dem Ringraum 122 zugewandte Seite der Außenwand 116 ist mit einem Innengewinde 123 versehen. Durch den Rohrstutzen 118 erstreckt sich ein zentraler Durchlass 124, dessen Durchmesser größer ist als der Durchmesser des äußeren Mantels des Hochspannungskabels 101, sodass der Klemmstempel 111 mit Spiel auf dem Hochspannungskabels 101 verschiebbar ist. Auf seiner Außenseite ist die Außenwand 116 mit einem Außengewinde 126 versehen.

Die Ummantelung 109 ist als rotationssymmetrischer Hohlzylinder ausgebildet. Das Ummantelung 109 weist eine Umfangswand 127 und auf der dem Klemmstempel 111 abliegenden Seite einen Boden 128 auf. Die Umfangswand 127 und der Boden 128 begrenzen einen Innenraum 129. Der Boden 128 weist einen Durchlass 130 auf, dessen Durchmesser größer ist als der Durchmesser des äußeren Mantels des Hochspannungskabels 101, sodass der Klemmstempel 111 mit Spiel auf dem Hochspannungskabels 101 verschiebbar ist. Auf einer dem Boden 128 gegenüberliegenden Stirnfläche 132 der Umfangswand 127 ist eine kreisringförmige Dichtung 133 angeordnet. Auf der dem Innenraum 129 gegenüberliegenden Seite des Bodens 128 ist ein Ummantelungsrohransatz 134 angeordnet, der eine Aufnahme 136 für die Leitungsdichtung 108 bildet. Ein überstehender Rand 137 der Haltekappe 107 ist mit seinem Innendurchmesser auf den Außendurchmesser des Ummantelungsrohransatzes 134 abgestimmt, sodass die Haltekappe 107 abdichtend auf den Ummantelungsrohransatz 134 aufsetzbar ist. Die Haltekappe 107 ist wahlweise reibschlüssig oder formschlüssig, beispielsweise mit Rastmitteln, auf den Ummantelungsrohransatz 134 gehalten. Die Haltekappe 107 weist in einem Boden 138 einen zentralen Durchlass 139 für das Hochspannungskabel 101 auf.

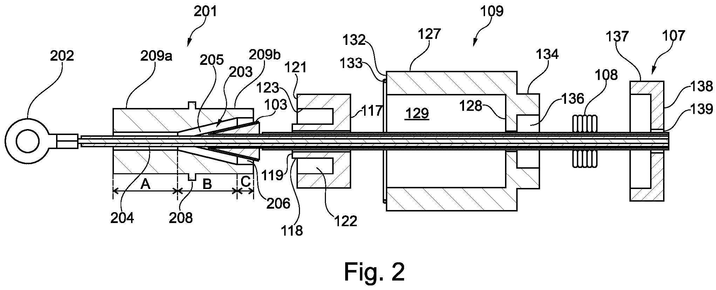

In Figur 2 zeigt zusätzlich zu Figur 1 eine Einschraubhülse 201 und ein Kontaktstück 202, das mit dem Leiter 106 verbunden ist. Im Unterschied zu Figur 1 ist der freigelegte Schirm 103 über die Mantelfläche 114 des Klemmkeils 112 umgeschlagen.

Die Einschraubhülse 201 ist ein zylindrischer Körper mit einer zentralen Durchgangsöffnung 203, die in drei Abschnitte gegliedert ist. Auf der dem Kontaktstück 202 zugewandten Seite der Einschraubhülse 201 ist die Durchgangsöffnung 203 in einem Abschnitt A als Bohrung 204 ausgebildet. Der Durchmesser der Bohrung 204 ist größer als der Außendurchmesser des inneren Mantels 104 des Hochspannungskabels 101. Daran anschließend weitet sich die Durchgangsöffnung 203 in einem Abschnitt B konusförmig auf, wodurch ein Hohlraum 205 in Gestalt eines Kegelstumpfes in Abschnitt B entsteht. In einem Abschnitt C geht der Hohlraum wieder in eine Bohrung 206 über, deren Durchmesser größer ist als der Durchmesser der Bohrung 204. Die Neigung der Mantelfläche des Hohlraums 205 entspricht der Neigung der Mantelfläche des Klemmkeils 112. die Einschraubhülse 201 weist auf ihrer Außenseite einen umlaufenden vorspringenden Kragen 208 auf. Beidseits des Randes 208 ist die Einschraubhülse 201 mit einem Außengewinde 209a bzw. 209b versehen.

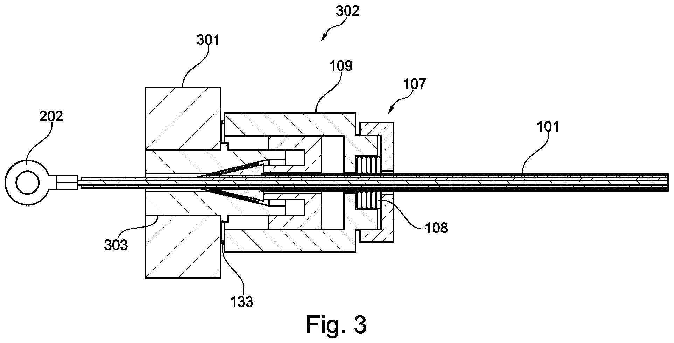

Figur 3 zeigt die in einer Gehäusewand 301 montierte Gehäusedurchführung, die als Ganzes mit dem Bezugszeichen 302 bezeichnet ist. Für die Montage der Gehäusedurchführung 302 werden zunächst die Haltekappe 107, die Leitungsdichtung 108, die Ummantelung 109 und der Klemmstempel 111 auf die Hochspannungsleitung 101 aufgefädelt. Dann werden der äußere Mantel 102, der Schirm 103 und der inneren Mantel 104 auf den Längen L1, L2 bzw. L3 abgesetzt. Dann wird der Klemmkeil 112 über den freigelegten Schirm 103 aufgeschoben, bis er an dem äußeren Mantel 102 anstößt. Der freigelegte Schirm 103 wird aufgebördelt und auf den Klemmkeil 112 gelegt. Dann wird die Einschraubhülse 201 mit der Bohrung 207 und dem Hohlraum 205 voraus über den Klemmkeil 112 geschoben und das Kontaktstück 202 auf dem Leiter 106 montiert. Das Außengewinde 209a wird in ein entsprechendes Gewindeloch 303 eingeschraubt. Dann wird der Klemmstempel 111 mit dem Innengewinde 123 auf das Außengewinde 209b geschraubt. Dabei drückt der Klemmstempel 111 den Klemmkeil 112 und den darauf aufliegenden Schirm 103 in axialer Richtung gegen eine Innenwand des Hohlraums 205 der Einschraubhülse 201 und stellt auf diese Weise einen elektrischen Kontakt zwischen dem Schirm 103 und der Gehäusewand 301 her. Das bei dem Aufschrauben des Klemmstempels 111 auf die Einschraubhülse 201 auf dem Klemmkeil 112 aufgrund einer Reibungskraft ausgeübte Drehmoment wird vollständig oder fast vollständig unmittelbar auf die Einschraubhülse 201 übertragen. Auf den Schirm 103 wird folglich im Wesentlichen keine Torsion ausgeübt. Sollte in Ausnahmefällen dennoch ein Draht des Schirms 103 abgerissen werden, so bleibt das abgerissene Drahtstück im Inneren der Einschraubhülse 201 gefangen und kann keinen Kurzschluss an anderer Stelle verursachen. Nachdem der Klemmstempel 111 fest geschraubt ist wird auf den Klemmstempel 111 die Ummantelung 109 geschraubt, bis die Dichtung 133 fest an der Gehäusewand 301 anliegt und die Ummantelung 109 gegenüber der Gehäusewand 301 abdichtet. Danach wird die Leitungsdichtung 108 in die Aufnahme 136 in der Ummantelung 109 geschoben und bewirkt eine Abdichtung des Hochspannungskabels 101 gegenüber der Ummantelung 109. Die Leitungsdichtung 108 wird mittels der Haltekappe 107, die auf den Ummantelungsrohransatz 134 aufgesetzt wird, in der Aufnahme 136 gehaltert.

**Bezugszeichenliste**

| | | | |
|---|---|---|---|
| 101 | Leitung | 201 | Einschraubhülse |
| 102 | äußerer Mantel | 202 | Kontaktstück |
| 103 | Schirm | 203 | Durchgangsöffnung |
| 104 | innerer Mantel | 204 | Bohrung |
| 106 | Leiter | 205 | Hohlraum |
| 107 | Haltekappe | 206 | Bohrung |
| 108 | Leitungsdichtung | 208 | Umlaufender Kragen |
| 109 | Ummantelung | 209a,b | Außengewinde |
| 111 | Klemmstempel | | |
| 112 | Klemmkeil | 301 | Gehäusewand |
| 113 | Durchgangsbohrung | 302 | Gehäusedurchführung |
| 114 | Mantelfläche | 303 | Gewindeloch |
| 116 | Außenwand | | |
| 117 | Boden | | |
| 118 | Rohrstutzen | | |
| 119 | Stirnfläche (Rohr stutzen) | | |
| 121 | Stirnfläche (Außenwand) | | |
| 122 | Ringraum | | |
| 123 | Innengewinde | | |
| 124 | Durchlass (Klemmstempel) | | |
| 126 | Außengewinde | | |
| 127 | Umfangswand | | |
| 128 | Boden | | |
| 129 | Durchlass | | |
| 132 | Stirnfläche (Umfangswand | | |
| 133 | Dichtung | | |
| 134 | Ummantelungsrohransatz | | |
| 136 | Aufnahme | | |
| 137 | Rand (Haltekappe) | | |
| 138 | Boden (Haltekappe) | | |
| 139 | Durchlass (Haltekappe) | | |

## Patentansprüche

1. Gehäusedurchführung, die zur Kontaktierung eines Schirms (103) einer geschirmten Leitung (101) geeignet ist, mit einer Einschraubhülse (201), die eine Durchgangsöffnung (203) aufweist,
**dadurch gekennzeichnet, dass** die Durchgangsöffnung (203) in der Einschraubhülse (201) einen Hohlraum (205) umfasst, in welchen ein Klemmkörper (112) mit einer zentralen Durchgangsbohrung (113) aufnehmbar ist, dass in die Durchgangsbohrung (113) des Klemmkörpers (112) eine Leitung (101) aufnehmbar ist, dass die Gehäusedurchführung (302) einen Klemmstempel (111) umfasst, der mit der Einschraubhülse (201) zusammenwirkt, um eine axiale zur Einschraubhülse (201) hin gerichtete Druckkraft auf den Klemmkörper (112) auszuüben.

2. Gehäusedurchführung nach Anspruch 1, **dadurch gekennzeichnet, dass** die Einschraubhülse (201) mit einem Außengewinde (209a,b) und der Klemmstempel (111) mit einem Innengewinde (123) versehen ist, die miteinander in Eingriff bringbar sind.

3. Gehäusedurchführung nach Anspruch 1 oder 2, **dadurch gekennzeichnet, dass** der Klemmstempel (111) einen zylindrischen Rohrstutzen (118) aufweist, der mit dem Klemmkörper (112) in Berührung ist.

4. Gehäusedurchführung nach einem der vorstehenden Ansprüche, **dadurch gekennzeichnet, dass** der Klemmstempel (111) einen Ringraum (122) umfasst, in welchen die Einschraubhülse (201) teilweise aufnehmbar ist.

5. Gehäusedurchführung nach einem der vorstehenden Ansprüche, **dadurch gekennzeichnet, dass**, dass die Gehäusedurchführung (302) eine Ummantelung (109) umfasst, welche die Leitung (101) gegenüber einem Außenraum abdichtet.

6. Gehäusedurchführung nach Anspruch 5, **dadurch gekennzeichnet, dass** die Ummantelung (109) mit einer Dichtung (133) versehen ist, um die Einschraubhülse (201) gegenüber einer Gehäusewand (301) abzudichten, in welche die Einschraubhülse eingeschraubt ist.

7. Gehäusedurchführung nach Anspruch 5 oder 6, **dadurch gekennzeichnet, dass** die Leitung (101) gegenüber der Ummantelung (109) mit einer Leitungsdichtung (108) abgedichtet ist.

8. Gehäusedurchführung nach einem der vorstehenden Ansprüche, **dadurch gekennzeichnet, dass** eine Haltekappe (107) die Leitungsdichtung (108) in einer Aufnahme (136) der Ummantelung (109) haltert.

9. Gehäusedurchführung nach einem der vorstehenden Ansprüche, **dadurch gekennzeichnet, dass** die Haltekappe (107) mit Rasthaken, mit einer Schnappverbindung oder reibschlüssig mit der Ummantelung verbunden ist.

10. Gehäusedurchführung nach einem der vorstehenden Ansprüche, **dadurch gekennzeichnet, dass** der Hohlraum (205) der Einschraubhülse (201) konisch ausgebildet ist und dass der Klemmkörper (112) kegelförmig mit einer zentralen Durchgangsbohrung (113) ausgebildet ist, wobei die Neigung einer Mantelfläche des kegelförmigen Klemmkörpers (112) im Wesentlichen dem Öffnungswinkel des konisch ausgebildeten Hohlraums (205) der Durchgangsöffnung (203) entspricht.

11. Verfahren, um einen Schirm (103) einer geschirmten Leitung (101) in einer Gehäusedurchführung (302) zu kontaktieren, wobei das Verfahren umfasst:
- Absetzen eines äußeren Mantels (102), eines Schirms (103) und eines inneren Mantels (104) der Leitung;
- Aufschieben eines Klemmstempel (111) und eines Klemmkörpers (112) auf die geschirmte Leitung;
- Aufbördeln des Schirms (103) und Auflegen des Schirmsauf eine Außenseite eines Klemmkörpers (112);
- Einschrauben einer Einschraubhülse (201) in eine Gehäusewand (301); und
- Einpressen des Klemmkörpers (112) in axialer Richtung in die Einschraubhülse (201).

12. Verfahren nach Anspruch 11, wobei das Verfahren außerdem umfasst, dass zunächst eine Haltekappe (107), eine Leitungsdichtung (108) und eine Ummantelung (109) auf die Leitung (101) aufgeschoben werden.
